# FASCICULE DE BREVET EUROPEEN

(11) **EP 2 790 938 B1**
(45) Date de publication et mention de la délivrance du brevet: **30.12.2015**
(21) Numéro de dépôt: 12714969.8
(22) Date de dépôt: 06.04.2012
(51) Int. Cl.: F25B 13/00, B60H 1/00, B60H 1/32, F25B 47/02

(54) **PROCEDE DE CONTROLE D'UN ENSEMBLE DE CONDITIONNEMENT THERMIQUE D'UN HABITACLE DE VEHICULE AUTOMOBILE**
VERFAHREN ZUM STEUERN EINER WÄRMEKLIMAANLAGENEINHEIT DES FAHRGASTRAUMES EINES KRAFTFAHRZEUGES
METHOD FOR CONTROLLING A THERMAL CONDITIONING UNIT OF A MOTOR VEHICLE PASSENGER COMPARTMENT

(43) Date de publication de la demande: 22.10.2014
(73) Titulaire: Valeo Systèmes Thermiques, 78321 Le Mesnil Saint Denis (FR)
(72) Inventeur: YAHIA, Mohamed, F-75005 Paris (FR); LIU, Jin Ming, F-78700 Conflans Saint Honorine (FR); NICOLAS, Bertrand, F-78990 Elancourt (FR)
(74) Mandataire: Pellegrini, Marie Claude
(86) Numéro de dépôt international: PCT/EP2012/001539
(87) Numéro de publication internationale: WO 2012/136379

(56) Documents cités:
- DE-A1- 10 250 174
- FR-A1- 2 937 589
- US-A1- 2003 037 562

## Description

Le secteur technique de la présente invention est celui des ensembles ou systèmes utilisés pour conditionner un flux d'air entrant dans un habitacle de véhicule automobile. Plus particulièrement, l'invention vise un circuit de fluide réfrigérant combiné à un circuit de fluide caloporteur, où le circuit de fluide réfrigérant est utilisé en mode chauffage, ou pompe à chaleur. Pendant cette phase de fonctionnement, le circuit de fluide caloporteur est utilisé pour stocker des calories préalablement à une mise en oeuvre d'une phase de dégivrage.

Un procédé de contrôle d'un ensemble de conditionnement thermique d'un habitacle de véhicule comportant un circuit de climatisation parcouru par un fluide réfrigérant et un circuit parcouru par un fluide caloporteur est connu du document FR2937589A1, qui constitue l'art antérieur le plus proche.

Un véhicule automobile est classiquement équipé d'une boucle de climatisation à l'intérieur de laquelle circule un fluide frigorigène. Cette boucle comprend classiquement un compresseur, un condenseur, un détendeur et un évaporateur parcourus par le fluide frigorigène. L'évaporateur est installé dans une installation de ventilation, chauffage et/ou climatisation généralement montée dans l'habitacle du véhicule pour fournir à ce dernier un flux d'air chaud ou un flux d'air froid en fonction d'une demande de l'utilisateur du véhicule. Le condenseur est quant à lui classiquement installé en face avant du véhicule pour être traversé par le flux d'air extérieur au véhicule.

Cette boucle de climatisation peut être utilisée en mode refroidissement ou en mode chauffage. En mode refroidissement, le fluide réfrigérant est envoyé vers le condenseur où le fluide réfrigérant est refroidit par le flux d'air extérieur. Puis, le fluide réfrigérant circule vers le détendeur où il subit un abaissement de sa pression avant d'entrer dans l'évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le circuit étant une boucle fermée, le fluide réfrigérant retourne alors vers le compresseur.

En mode chauffage, le fluide est mis en circulation par le compresseur qui l'envoie vers l'évaporateur. Ce dernier se comporte alors comme un condenseur, où le fluide réfrigérant est refroidi par l'air circulant dans l'installation de ventilation. Cet air se chauffe donc au contact de l'évaporateur et apporte ainsi des calories à l'habitacle du véhicule. Après passage dans l'évaporateur, le fluide réfrigérant est détendu par un détendeur avant d'arriver dans le condenseur. Le flux d'air extérieur chauffe alors le fluide réfrigérant. Le flux d'air extérieur est par conséquent plus froid après son passage dans le condenseur comparé à sa température avant son passage au travers du condenseur. Le fluide réfrigérant retourne alors vers le compresseur.

Une telle organisation a été améliorée en remplaçant l'évaporateur sur l'air évoqué ci-dessus par un circuit de fluide caloporteur qui capte les frigories au niveau d'un échangeur fluide réfrigérant/fluide caloporteur et les transporte jusqu'à un échangeur fluide caloporteur/air monté dans l'installation de ventilation, chauffage et climatisation du véhicule.

En mode chauffage, le condenseur installé à l'extérieur de l'habitacle se comporte comme un évaporateur. Autrement dit, au cours du cheminement du fluide réfrigérant à l'intérieur du condenseur, le fluide réfrigérant capte de la chaleur au flux d'air ambiant. Dans ce dernier mode, il est des conditions climatiques au cours desquelles se forme du givre sur le condenseur utilisé en tant qu'évaporateur. Ceci est le résultat du refroidissement opéré par le condenseur, fonctionnant en tant qu'évaporateur, qui abaisse la température du flux d'air ambiant le traversant en dessous de zéro degré Celsius, provoquant ainsi un gel de l'humidité présente dans le flux d'air ambiant. Cette situation est problématique car le givre obstrue le passage du flux d'air ambiant au travers du condenseur, ce qui dégrade fortement les performances de la boucle de climatisation en mode chauffage au point de ne plus assurer la fonction de chauffage du flux d'air envoyé dans l'habitacle. Il en découle finalement une diminution des performances thermiques de la boucle de climatisation, ce qu'il convient d'éviter.

L'invention vise à résoudre ce problème de givrage de l'échangeur de la boucle de climatisation exposé au flux d'air extérieur sans pour autant ajouter des composants supplémentaires.

Le but de la présente invention est donc de résoudre les inconvénients décrits ci-dessus principalement en utilisant le circuit de fluide caloporteur, destiné à transporter les frigories en provenance du fluide réfrigérant vers le flux d'air intérieur en mode refroidissement, pour stocker des calories pendant une durée déterminée préalablement à la mise en oeuvre du mode de dégivrage de l'échangeur de face avant.

L'invention a donc pour objet un procédé de contrôle d'un ensemble de conditionnement thermique d'un habitacle de véhicule, comprenant un circuit de climatisation parcouru par un fluide réfrigérant et un circuit primaire parcouru par un premier fluide caloporteur, le circuit de climatisation comprend au moins un compresseur, un premier échangeur agencé pour assurer un échange thermique en vue d'influencer la température d'un flux d'air intérieur envoyé dans l'habitacle et un échangeur extérieur, le circuit primaire comprend au moins un échangeur primaire agencé pour assurer un échange thermique entre le premier fluide caloporteur et le flux d'air intérieur, ledit ensemble comprenant un deuxième échangeur agencé pour assurer un échange thermique entre le fluide réfrigérant et le premier fluide caloporteur et installé dans le circuit de climatisation en aval du premier échangeur selon le sens de déplacement du fluide réfrigérant dans le circuit de climatisation, caractérisé en ce qu'il comprend :
- une étape de détermination a) d'un risque de givrage de l'échangeur extérieur (13),
- une étape de stockage b) des calories consistant en une diminution ou une suppression de l'échange thermique du premier échangeur (10, 37), si l'étape de détermination a) est vérifiée.

La diminution ou la suppression de l'échange thermique au niveau du premier échangeur se traduit par un basculement du point chaud du cycle thermodynamique en faveur de l'échangeur primaire. La température du premier fluide caloporteur est ainsi augmentée.

Selon une première caractéristique du procédé, l'étape de stockage b) de diminution ou de réduction de l'échange thermique du premier échangeur est opérée jusqu'à ce que la température du premier fluide caloporteur atteigne une valeur seuil.

Dans une telle situation, la valeur seuil est comparée à une température du flux d'air intérieur, par exemple mesurée en aval de l'échangeur primaire ou à une estimation de cette température en aval de l'échangeur primaire, selon le sens de déplacement du flux d'air intérieur.

Selon un exemple de réalisation, le procédé comprend une étape de dégivrage c) selon laquelle les calories stockées dans le circuit primaire (25) sont restituées à l'échangeur extérieur (13), l'étape de dégivrage est activée quand la température du premier fluide caloporteur atteint la valeur seuil.

Selon une deuxième caractéristique de l'invention, l'ensemble est apte à fonctionner selon un mode de chauffage où le flux d'air intérieur est chauffé, un mode de refroidissement où le flux d'air intérieur est refroidi, un mode de dégivrage de l'échangeur extérieur et en ce que le mode de dégivrage est activé quand la valeur seuil est atteinte. Avantageusement, l'ensemble est également apte à fonctionner selon un mode de pré-dégivrage de l'échangeur extérieur.

Selon un exemple de réalisation, l'étape de détermination a) du risque de givrage correspond à une durée de fonctionnement de l'ensemble en mode chauffage.

Selon un autre exemple de réalisation, l'étape de détermination a) du risque de givrage est opérée par mesure ou évaluation d'une pression du fluide réfrigérant à l'entrée du compresseur.

Avantageusement, l'étape de stockage b) consistant en une diminution de l'échange thermique du premier échangeur est opérée par un débit du deuxième fluide caloporteur dans le circuit secondaire supérieur à 200 litres/heure.

Alternativement, l'étape de stockage b) consistant en une suppression de l'échange thermique du premier échangeur consistant en un arrêt du débit du deuxième fluide caloporteur.

Selon une autre variante de réalisation de l'ensemble l'étape de stockage b) consistant en une suppression de l'échange thermique du premier échangeur est mise en oeuvre par une opération de contournement du premier échangeur, vue du circuit de fluide réfrigérant.

Un exemple de réalisation d'un tel moyen de contournement est réalisé par une conduite constitutive du circuit de climatisation installée en parallèle du premier échangeur.

On notera que l'échangeur primaire est installé en amont de l'échangeur secondaire selon le sens de déplacement du flux d'air intérieur.

Enfin, le circuit primaire comprend un moyen de mise en circulation du premier fluide caloporteur, autrement appelé pompe, ledit moyen de mise en circulation du premier fluide caloporteur étant activé quand le risque de givrage est vérifié.

L'invention couvre encore un dispositif pour la mise en oeuvre du procédé évoqué ci-dessus, l'ensemble comprenant un circuit secondaire parcouru par un deuxième fluide caloporteur, ledit premier échangeur étant agencé pour assurer un échange thermique entre le fluide réfrigérant et le deuxième fluide caloporteur alors que le circuit secondaire comprend un échangeur secondaire agencé pour assurer un échange thermique entre le deuxième fluide caloporteur et le flux d'air intérieur.

Un tout premier avantage selon l'invention réside dans la possibilité de dégivrer aisément l'échangeur thermique installé au niveau de la face avant du véhicule. Les calories emmagasinées dans le circuit primaire préalablement à la mise en fonctionnement du mode de dégivrage sont restituées au fluide réfrigérant pendant ce mode. Le circuit primaire forme ainsi le point chaud nécessaire au bon fonctionnement de la boucle thermodynamique, ce qui permet d'augmenter la température du fluide réfrigérant qui pénètre dans l'échangeur extérieur pour le dégivrer.

Un autre avantage non négligeable réside dans la mise à profit d'un circuit primaire de fluide caloporteur pour la phase de dégivrage. En effet, ce circuit est habituellement utilisé pendant le mode de refroidissement alors qu'il est arrêté, ou inutilisé, pendant le mode de chauffage ou dégivrage. Il s'agit donc de composants qui ne sont pas exploités de manière optimale. L'invention améliore la situation en utilisant ce circuit primaire comme un dispositif de stockage thermique en élevant la température du fluide caloporteur, de l'échangeur primaire et du deuxième échangeur. Ces composants présentent une inertie thermique que l'invention met à profit pendant la phase de dégivrage.

D'autres caractéristiques, détails et avantages de l'invention ressortiront plus clairement à la lecture de la description donnée ci-après à titre indicatif en relation avec des dessins dans lesquels :
- la figure 1 est une vue schématique d'un mode de réalisation d'un ensemble de conditionnement thermique selon l'invention utilisé en mode chauffage de l'habitacle,
- la figure 2 est une vue schématique du mode de réalisation de la figure 1 utilisé quand le risque de givrage est avéré, ci-après appelé phase de pré-dégivrage ou de stockage de calories,
- la figure 3 est une vue schématique du mode de réalisation de la figure 1 utilisé en mode de dégivrage de l'échangeur extérieur,
- la figure 4 est une vue schématique d'une variante de réalisation de l'ensemble de conditionnement thermique des figures 1 à 3, utilisé en mode chauffage de l'habitacle,
- la figure 5 est une vue schématique de la variante de réalisation de l'ensemble de conditionnement thermique selon la figure 4, quand le risque de givrage est avéré, ci-après appelé phase de pré-dégivrage ou de stockage de calories,
- la figure 6 est une vue schématique de la variante de réalisation de l'ensemble de conditionnement thermique de la figure 4, fonctionnant en mode dégivrage,
- la figure 7 est une vue représentant un organigramme du procédé de contrôle selon l'invention de l'ensemble de conditionnement thermique.

Il faut noter que les figures exposent l'invention de manière détaillée pour mettre en oeuvre l'invention, lesdites figures pouvant bien entendu servir à mieux définir l'invention le cas échéant.

Sur les figures annexées, les traits mixtes représentent les parties de la boucle de climatisation dans lesquelles circule un fluide réfrigérant à basse pression, comparativement aux traits forts qui représentent les parties de la boucle de climatisation dans lesquelles circule ce même fluide à haute pression, c'est-à-dire une valeur de pression plus élevée que la valeur de la basse pression du fluide. Les traits fins illustrent les portions de la boucle de climatisation qui ne sont pas empruntées par le fluide réfrigérant au cours du mode de fonctionnement considéré.

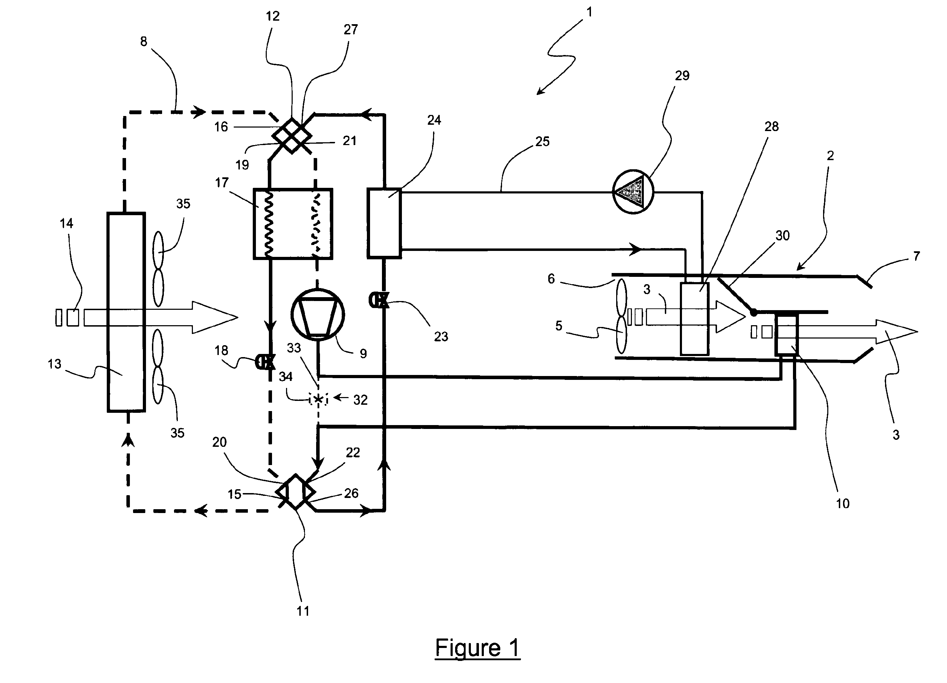

Sur les figures 1 à 6, il est représenté un ensemble de conditionnement thermique 1 d'un habitacle de véhicule automobile. Cet ensemble coopère avec un système de ventilation, de chauffage et/ou de climatisation 2 destiné à modifier les paramètres aérothermiques de l'air contenu à l'intérieur de l'habitacle du véhicule. Une telle modification est obtenue à partir de la délivrance d'au moins un flux d'air pulsé à l'intérieur de l'habitacle, ci-après appelé flux d'air intérieur 3. A cet effet, le système de ventilation, de chauffage et/ou de climatisation 2 comprend un boîtier 4, réalisé en matière plastique, qui loge un pulseur 5 pour faire circuler le flux d'air intérieur 3 depuis au moins une bouche d'admission d'air vers au moins une bouche de délivrance d'air 7 que comporte le boîtier. Un tel système de ventilation, de chauffage et/ou de climatisation 2 est logé sous une planche de bord du véhicule et canalise la circulation du flux d'air intérieur 3.

L'ensemble 1 comprend une boucle de climatisation 8 à l'intérieur de laquelle circule un fluide réfrigérant qui apporte les calories (mode chauffage) ou les frigories (mode refroidissement) permettant au système de chauffer ou de refroidir le flux d'air intérieur 3.

Pour ce faire, la boucle de climatisation comporte plusieurs échangeurs thermiques entre le fluide réfrigérant et soit de l'air, soit un fluide caloporteur circulant dans un circuit distinct, un tel fluide étant par exemple de l'eau comportant du glycol.

De préférence, le fluide réfrigérant est du type d'un fluide super-critique, tel que du dioxyde de carbone, par exemple, connu sous l'appellation R744. Il peut aussi être un fluide sous-critique, tel que l'hydrofluorocarbone connu sous le terme R134a ou un fluide frigorigène à faible nuisance sur l'effet de serre, c'est-à-dire qui soit en mesure d'offrir une solution durable pour les climatiseurs automobiles, connu sous la dénomination HFO1234yf.

La boucle ou circuit de climatisation 8 comprend un compresseur 9 pour comprimer le fluide réfrigérant à l'état gazeux. Il comprend aussi un premier échangeur de chaleur 10, du type d'un refroidisseur de gaz ou condenseur, dont la fonction est d'assurer un échange thermique en vue d'influencer directement ou indirectement la température du flux d'air intérieur envoyé dans l'habitacle. On notera que ce premier échangeur thermique 10 est installé directement en aval du compresseur 9 selon le sens de déplacement du fluide réfrigérant dans le circuit.

Selon un mode de réalisation préféré de l'ensemble de conditionnement thermique, tel qu'il est illustré aux figures 1 à 3, le premier échangeur thermique 10 réalise un échange thermique directement entre le fluide réfrigérant et le flux d'air intérieur 3, le premier échangeur 10 comprenant un faisceau de tubes délimitant des chambres dans lesquelles circule le fluide réfrigérant et à l'extérieur desquelles le flux d'air intérieur 3 circule. Dans une telle situation, le premier échangeur 10 est logé dans l'installation de ventilation, de chauffage et/ou de climatisation 2.

Le circuit de climatisation 8 comprend un moyen de contournement 32 du premier échangeur 10. Ce moyen de contournement 32 comprend une conduite 33 et une valve 34 chargée d'autoriser ou d'interdire la circulation de fluide réfrigérant dans la conduite 33. Cette valve 34 est une valve deux voies installée dans la conduite 33 mais l'invention prévoit également le cas où la valve 34 est une valve trois voies installée à l'embranchement d'une conduite qui va au premier échangeur 10, ou qui en revient, avec la conduite 33.

La conduite 33 est installée en parallèle du premier échangeur 10 du point de vue du circuit de climatisation 8.

Sur les figures 1 à 6 annexées, le circuit de climatisation 8 comprend deux vannes à quatre voies 11 et 12 permettant à l'ensemble de conditionnement thermique d'opérer un fonctionnement en mode chauffage, un fonctionnement en mode refroidissement ou un fonctionnement en mode dégivrage.

Pour ce faire, les deux vannes 11 et 12 sont reliées l'une à l'autre de sorte qu'elles définissent quatre branches dans chacune desquelles le fluide réfrigérant est apte à circuler. Afin de faciliter la compréhension de l'architecture du circuit de climatisation 8, les branches seront, au vu de leur positionnement dans une lecture allant de gauche à droite, qualifiées de première, de deuxième, de troisième et de quatrième branches.

Par rapport au compresseur et au sens de circulation du fluide réfrigérant dans le circuit de climatisation 8, la vanne 12 est disposée en aval de la vanne 11 de sorte que cette dernière sera qualifiée par la suite de première vanne 11 et que par voie de conséquence, la vanne 12 sera qualifiée de seconde vanne 12.

La première branche, reliant les vannes 11 et 12 entre elles, comprend un échangeur thermique relié au repère 13 sur les figures 1 à 6 annexées, qui sera par la suite qualifié d'échangeur extérieur 13 étant donné qu'il est implanté, par exemple, sur une face avant du véhicule pour être traversé par un flux d'air extérieur à l'habitacle, référencé 14.

Dans un mode de réalisation, le fluide réfrigérant circule dans l'échangeur extérieur 13, tandis que le flux d'air extérieur 14 dans lequel évolue le véhicule peut être mis en mouvement par une pluralité de ventilateurs 35.

C'est ainsi qu'en mode refroidissement, le fluide réfrigérant est refroidi par le flux d'air extérieur 14 et qu'en mode chauffage, le fluide réfrigérant est chauffé en puisant de la chaleur dans le flux d'air extérieur 14. Cet échangeur extérieur 13 est lié à une première sortie 15 de la première vanne 11 et à une première entrée 16 de la seconde vanne 12 par le biais de canalisations dédiées.

La deuxième branche reliant les vannes 11 et 12 entre elles comprend, selon le sens de circulation du fluide réfrigérant, l'un des deux circuits internes d'échange thermique d'un module 17 et un premier organe de détente 18.

Ce module 17 se compose de préférence d'un échangeur de chaleur interne et d'un accumulateur qui est assimilable à une réserve de fluide réfrigérant à l'état liquide. Un tel module 17 permet avantageusement un échange thermique d'un même fluide réfrigérant en deux points distincts du circuit de climatisation, c'est-à-dire entre la portion du circuit de climatisation soumis à une haute pression / haute température et la portion du circuit de climatisation soumis à une basse pression / basse température. Une telle disposition améliore le rendement thermique du circuit de climatisation 8. Pour ce faire, le module 17 comprend un circuit interne haute pression et un circuit interne basse pression, le circuit interne basse pression étant disposé en amont du compresseur 9, selon un sens de circulation du fluide réfrigérant à l'intérieur du circuit de climatisation.

Le module 17 est agencé en amont du premier organe de détente 18. Par conséquent, l'entrée du circuit interne haute pression du module 17 est reliée à une première sortie 19 de la seconde vanne 12, tandis que sa sortie est reliée à l'entrée du premier organe de détente 18. La sortie de l'organe de détente 18 est reliée à une première entrée 20 de la première vanne 11.

La troisième branche reliant les vannes 11 et 12 entre elles comprend, selon le sens de circulation du fluide réfrigérant, l'autre circuit d'échange thermique du module 17 agencé en amont du compresseur 9, ce dernier étant également disposé en amont du premier échangeur 10 qui est destiné à chauffer l'air entrant dans l'habitacle du véhicule. C'est ainsi que par le biais de quatre canalisations, une seconde sortie 21 de la seconde vanne 12 est reliée à l'entrée du circuit interne basse pression du module 17, que la sortie de ce même circuit du module 17 est reliée à l'entrée du compresseur 9, que la sortie de ce dernier est reliée à l'entrée du premier échangeur thermique 10, et que la sortie de cet échangeur est reliée à une seconde entrée 22 de la première vanne 11.

Enfin, la quatrième branche reliant les vannes 11 et 12 comprend, selon le sens de circulation du fluide réfrigérant, un deuxième organe de détente 23 disposé en amont d'un deuxième échangeur 24 placé à une confluence du circuit de climatisation 8 et d'un circuit primaire 25 constitutif de l'ensemble 1. Un tel deuxième échangeur de chaleur 24 permet un transfert d'énergie thermique entre le fluide réfrigérant et un premier fluide caloporteur circulant dans le circuit primaire 25. Ce deuxième échangeur 24 est par ailleurs disposé hors de l'installation de ventilation, de chauffage et/ou de climatisation 2.

On notera tout particulièrement que le deuxième échangeur 24 est installé dans le circuit de climatisation après le premier échangeur 10. Autrement dit, le deuxième échangeur 24 est en aval du premier échangeur 10 selon le sens de circulation du fluide réfrigérant dans la troisième et quatrième branche. Seule la première vanne quatre voies 11 et le deuxième organe de détente 23 sont intercalés entre le premier échangeur 10 et le deuxième échangeur 24.

C'est ainsi que la seconde sortie 26 de la première vanne 11 est reliée à l'entrée du deuxième organe de détente 23, que la sortie de cet organe 23 est reliée à l'entrée du deuxième échangeur 24, et qu'enfin la sortie de cet échangeur 24 est reliée à une seconde entrée 27 de la seconde vanne 12.

Les composants du circuit de climatisation 8 décrits ci-dessus sont raccordés les uns aux autres par l'intermédiaire de tubes, de conduites ou de tout moyen apte à canaliser le fluide réfrigérant pour le transporter d'un premier à un second point.

Le circuit primaire 25 est parcouru par un premier fluide caloporteur. Ce circuit comprend le deuxième échangeur 24, un échangeur primaire 28, une pompe primaire 29 destinée à faire circuler le premier fluide caloporteur et des tuyaux pour relier ces composants.

L'échangeur primaire 28 est agencé pour assurer un échange thermique entre le premier fluide caloporteur et le flux d'air intérieur 3 que le boîtier 4 de l'installation canalise. Il s'agit d'un échangeur thermique constitué d'une multiplicité de tubes délimitant chacun une chambre dans lesquelles circule le premier fluide caloporteur et à l'extérieur de laquelle le flux d'air intérieur 3 circule.

L'échangeur primaire 28 est installé transversalement au flux d'air intérieur 3 à l'intérieur du boîtier 4 de l'installation de ventilation, de chauffage et/ou de climatisation 2. Cet échangeur primaire 28 est installé en amont du premier échangeur 10 selon le sens du déplacement du flux d'air intérieur 3.

Le boîtier 4 comprend encore un volet de mixage 30 installé entre l'échangeur primaire 28 et le premier échangeur 10 et susceptible de prendre une première position où il contraint le flux d'air intérieur 3 à passer au travers du premier échangeur 10, une deuxième position où le volet de mixage 30 interdit le passage du flux d'air intérieur 3 dans le premier échangeur 10, ce flux d'air contournant alors cet échangeur. Le volet de mixage 30 est enfin en mesure de prendre toutes positions intermédiaires entre la première position et la deuxième position afin d'assurer un mélange ou mixage d'air froid et d'air chaud.

L'ensemble de conditionnement thermique vient d'être décrit et on va maintenant s'attacher à décrire le fonctionnement de cet ensemble selon les modes d'utilisation.

La figure 1 montre l'ensemble utilisé par exemple en hiver, c'est-à-dire en mode chauffage du flux d'air intérieur 3 envoyé dans l'habitacle.

Côté circuit de climatisation 8, le fluide réfrigérant est comprimé et mis en circulation par le compresseur 9, puis traverse le premier échangeur 10 où le fluide réfrigérant cède ses calories au flux d'air intérieur 3. Le fluide réfrigérant poursuit son parcours en circulant au travers de la première vanne quatre voies 11, en entrant par la seconde entrée 22 pour sortir par la seconde sortie 26.

Le fluide réfrigérant passe au travers du deuxième organe de détente 23 sans subir d'abaissement de pression. Pour ce faire, l'organe de détente 23 est totalement ouvert et laisse passer le fluide réfrigérant sans restriction. Alternativement, il peut être prévu une canalisation (non représentée) qui contourne le deuxième organe de détente 23.

Le fluide réfrigérant passe alors dans la deuxième vanne quatre voies 12 en entrant par sa deuxième entrée 27 et en sortant par sa première sortie 19. Le fluide réfrigérant passe ensuite dans le module 17 pour atteindre le premier organe de détente 18. Cet organe de détente 18 autorise une circulation du fluide réfrigérant vers l'échangeur extérieur 13, au travers duquel il subit un abaissement de sa pression.

Le fluide réfrigérant, ainsi détendu, échange avec le flux d'air extérieur 14, ce qui se traduit par une élévation de température du fluide réfrigérant. Dans cette situation, l'échangeur extérieur se comporte comme un évaporateur.

Le fluide poursuit son chemin et pénètre par la première entrée 16 dans la deuxième vanne quatre voies 12. Il en ressort par la seconde sortie référencée 21, puis entre dans le circuit basse pression du module 17.

Le circuit de climatisation 8 étant une boucle fermée, le fluide réfrigérant termine son cycle en arrivant à l'entrée du compresseur 9.

Le circuit primaire 25 est également actif pendant le mode de fonctionnement chauffage. Le premier fluide caloporteur est mis en circulation par la pompe primaire 29 et le reliquat de calories encore présent dans le fluide réfrigérant est alors transféré au premier fluide caloporteur au moyen de l'échange thermique réalisé par le deuxième échangeur 24. La pompe primaire 29 étant activée, le premier fluide caloporteur transporte ces calories vers l'échangeur primaire 28 qui les cède alors au flux d'air intérieur 3. On comprend ainsi que l'échangeur primaire 28 couplé au deuxième échangeur 24 réalise une préchauffe du flux d'air intérieur, la température requise étant atteinte par échange entre ce flux d'air intérieur préchauffé et le premier échangeur de chaleur 10.

Dans une telle situation de fonctionnement, il est possible de voir apparaître du givre ou de la glace sur l'échangeur extérieur 13. Le procédé objet de l'invention met en oeuvre une étape de détermination d'un risque de givre sur cet échangeur extérieur 13.

Selon un exemple de réalisation, la détermination du risque de givrage correspond à une durée de fonctionnement de l'ensemble 1 de conditionnement thermique en mode chauffage. Une telle information est disponible par l'activation d'un compteur au moment où débute le mode chauffage. Cette durée déterminée est une valeur fixe, qui correspond à une valeur moyenne d'occurrence de givre sur l'échangeur extérieur 13. A titre d'exemple, la durée est comprise entre 10 et 40 minutes. Selon un autre exemple de réalisation, la détermination du risque de givrage est opérée par mesure ou évaluation d'une pression du fluide réfrigérant à l'entrée du compresseur. Il s'agit de la basse pression qui diminue par la présence de givre sur la face frontale de l'échangeur extérieur 13 et cette pression peut par exemple être mesurée par un capteur « in situ » monté dans le circuit de climatisation entre la sortie de l'échangeur extérieur 13 et l'entrée du compresseur 9.

Selon encore un autre exemple de réalisation, la détermination peut être réalisée par un capteur positionné au droit du faisceau de l'échangeur extérieur 13 traversé par le flux d'air 14. Ce capteur de température est disposé en aval de l'échangeur extérieur 13 selon un sens d'écoulement d'un flux d'air extérieur 14 à travers l'échangeur extérieur et en un endroit choisi où le givre apparaît en premier.

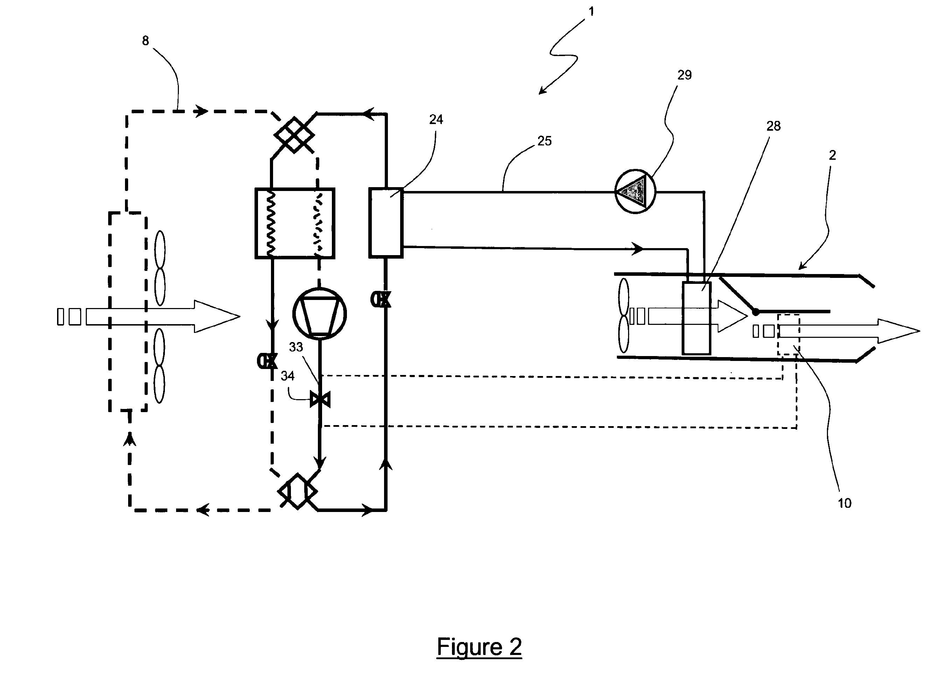

Lorsque le risque de givre est avéré ou vérifié, c'est-à-dire qu'une certaine durée s'est écoulée depuis la mise en service du mode de chauffage, ou qu'un capteur ou une évaluation donne une information de présence de givre, le procédé prévoit une étape de diminution ou de réduction de l'échange thermique du premier échangeur 10. Cette étape est appelée mode de pré-dégivrage et trouve un exemple de réalisation sur la figure 2.

La description ci-dessous s'attache aux différences et on se reportera à la description de la figure 1 pour les éléments identiques.

La diminution ou la suppression d'échange thermique est opérée jusqu'à ce que la température du premier fluide caloporteur dans le circuit primaire 25 atteigne une valeur seuil, cette dernière n'étant pas inférieure à 35°C. Avantageusement, cette valeur seuil n'excède pas 45°C.

D'une manière générale, on peut également déterminer cette valeur de température seuil comme étant la température mesurée en aval du premier échangeur 10 pendant le mode de chauffage et avant la mise en oeuvre de la phase de pré-dégivrage, diminuée de 5°C.

La valeur seuil détermine le temps de fonctionnement de l'ensemble en mode pré-dégivrage ou stockage de calories puisque le mode de dégivrage n'est activé que lorsque la valeur seuil de température est atteinte.

Le fait de réduire l'échange thermique au niveau du premier échangeur 10 provoque une augmentation de la température du fluide réfrigérant au niveau du deuxième échangeur 24. La température du premier fluide caloporteur et de l'échangeur primaire 28 s'élève également et ces composants se comportent alors comme des stockeurs thermiques. En effet, la masse circulant de premier fluide caloporteur, la masse de l'échangeur primaire 28 et la masse du deuxième échangeur 24, tous deux notamment réalisés à base d'aluminium, captent et stockent les calories.

Par conséquent, le procédé objet de l'invention permet de réaliser une étape de pré-dégivrage, nommée aussi étape de stockage de calories, selon laquelle intervient une captation des calories par chacun des éléments constitutifs du circuit primaire 25 durant la réduction ou suppression de l'échange thermique au niveau du premier échangeur 10.

La figure 2 montre une variante où l'échange thermique opéré au niveau du premier échangeur 10 est supprimée. Cette suppression est réalisée par l'ouverture de la valve 34 qui permet au fluide réfrigérant de circuler dans la conduite 33. Corrélativement, le fluide réfrigérant ne circule plus dans le premier échangeur 10 comme cela est représenté par les pointillés fins sur la figure 2.

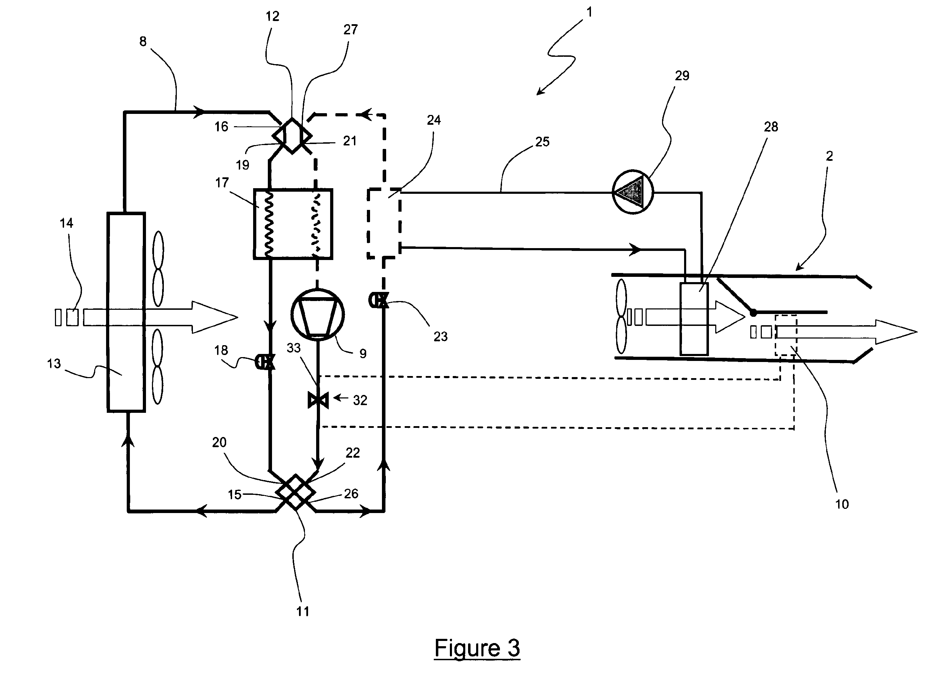

La figure 3 illustre l'ensemble de conditionnement thermique pendant une phase de fonctionnement correspondant à un mode de dégivrage de l'échangeur extérieur 13. La description ci-dessous s'attache aux différences et on se reportera à la description des figures 1 ou 2 pour les éléments identiques.

La position de la première vanne 11 et de la deuxième vanne 12 est inversée.

Le compresseur 9 comprime le fluide réfrigérant et le fait circuler au travers du moyen de contournement 32, c'est-à-dire au travers de la conduite 33. En conséquence, le fluide réfrigérant ne circule pas dans le premier échangeur 10. La première vanne 11 conduit ce fluide réfrigérant de sa seconde entrée 22 vers sa première sortie 15, avant de rejoindre l'échangeur extérieur 13 dans un état de haute pression et de haute température. Une telle disposition permet de dégivrer très rapidement l'échangeur extérieur, la glace se mettant à fondre pour à nouveau autoriser la circulation du fluide d'air extérieur 14 au travers de l'échangeur extérieur 13.

Selon une variante non représentée, le moyen de contournement 32 est dans son état inactif de sorte que le fluide réfrigérant circule dans le premier échangeur 10. Dans ce cas, le compresseur 9 comprime le fluide réfrigérant et le fait circuler au travers du premier échangeur 10. En conséquence, le fluide réfrigérant ne circule pas dans de la conduite 33. Le fluide réfrigérant rejoint l'échangeur extérieur 13 dans un état de haute pression et de haute température. Une telle disposition permet de dégivrer moins rapidement l'échangeur extérieur par rapport au mode de fonctionnement selon lequel le fluide réfrigérant contourne l'échangeur principal 10. Cela permet avantageusement de maintenir un degré de confort dans l'habitacle du véhicule, puisque l'air pulsé circule à travers le premier échangeur 10 recevant un fluide réfrigérant à haute température et haute pression. Malgré les pertes de calories au niveau de l'échangeur 10, l'échangeur extérieur 13 est traversé par un fluide réfrigérant chaud de sorte que la glace fond pour à nouveau autoriser la circulation du fluide d'air extérieur 14 au travers de l'échangeur extérieur 13.

Le fluide réfrigérant sort de l'échangeur extérieur 13 pour atteindre la deuxième vanne quatre voies 12, pénétrant dans cette dernière par sa première entrée 16 pour en sortir par sa première sortie 19. Le fluide réfrigérant traverse la branche haute pression du module 17 puis le premier organe de détente 18 sans subir de détente en passant à son travers.

Le fluide réfrigérant poursuit son parcours en entrant dans la première vanne quatre voies 11 par sa première entrée 20 pour en sortir par sa deuxième sortie 26.

Le deuxième organe de détente abaisse la pression du fluide réfrigérant qui le traverse. Ce fluide réfrigérant pénètre alors dans le deuxième échangeur 24 dans un état de basse pression et de basse température.

Après avoir traversé cet échangeur fluide réfrigérant/fluide caloporteur référencé 24, le fluide réfrigérant atteint la seconde entrée 27 de la deuxième vanne quatre voies 11 pour en sortir par la seconde sortie 21.

Le fluide réfrigérant travers le module 17 et rejoint finalement le compresseur 9.

Côté circuit primaire 25, le mode de dégivrage se traduit par la mise en fonctionnement de la pompe primaire 29. Le premier fluide caloporteur circule ainsi de l'échangeur primaire 28 vers le deuxième échangeur 24, les calories étant ainsi échangées avec le fluide réfrigérant.

On rappelle que pendant le mode de pré-dégivrage qui a précédé le mode dégivrage, la température des composants du circuit primaire 25 a été élevée afin de stocker des calories. Le circuit primaire 25 joue alors le rôle de point chaud nécessaire au fonctionnement du cycle thermodynamique quand l'ensemble fonctionne en mode dégivrage, alors que la température extérieure au véhicule est basse, par exemple en dessous de 0°C.

Un tel point chaud permet avantageusement de réduire la consommation d'énergie consommée par le compresseur 9 puisque les calories utiles au dégivrage sont déjà présentes dans le circuit de climatisation, par l'intermédiaire de l'échange thermique s'opérant au niveau du deuxième échangeur 24.

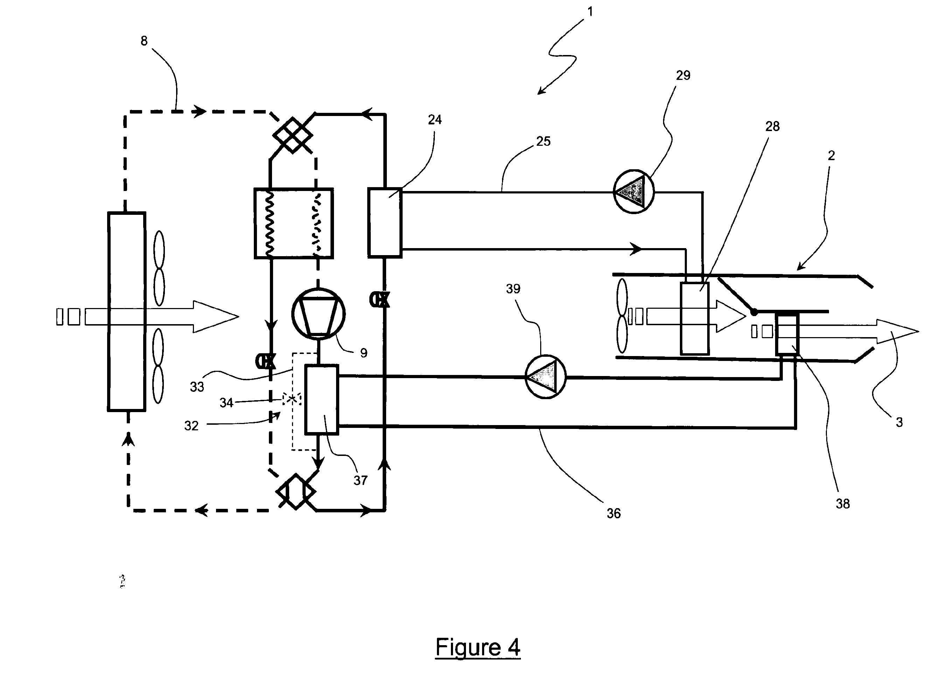

Les figures 4 à 6 montrent une variante de réalisation de l'ensemble de conditionnement thermique sur lequel le procédé selon l'invention agit. Les différences entre la variante et le mode de réalisation des figures 1 à 3 vont être décrites ci-après. Pour les éléments ou fonctionnements identiques, on se reportera à la description des figures 1 à 3.

La figure 4 montre l'ensemble 1 dans un mode de chauffage. Cet ensemble comprend un circuit secondaire 36 parcouru par un deuxième fluide caloporteur, dont la fonction est de réaliser le mode chauffage en chauffant le flux d'air intérieur 3. Ce circuit secondaire 36 est distinct du circuit primaire 25, en ce sens que le deuxième fluide caloporteur ne se mélange pas avec le premier fluide caloporteur.

Alors que selon le mode de réalisation des figures 1, 3, le premier échangeur est installé dans le boîtier pour échanger avec le flux d'air intérieur, le premier échangeur 37 de la variante n'est pas installé dans le boîtier 4. L'échange thermique entre le fluide réfrigérant et le deuxième fluide caloporteur est réalisé au moyen du premier échangeur 37. Ce premier échangeur est installé directement en aval du compresseur 9.

Le circuit secondaire 36 comprend encore un échangeur secondaire 38 dont la fonction est de transférer les calories présentes dans le deuxième fluide caloporteur au flux d'air intérieur 3. Cet échangeur secondaire 38 est un échangeur fluide caloporteur/air installé à l'intérieur du boîtier 4, transversalement au flux d'air intérieur 3.

Le deuxième fluide caloporteur est mis en mouvement dans le circuit secondaire 36 par une pompe secondaire 39, avantageusement entraînée par un moteur électrique.

Comme dans la première variante, il existe un moyen de contournement 32 comprenant une conduite 33 et une valve 34 deux voies ou trois voies. Ce moyen de contournement 32 permet au fluide réfrigérant d'éviter de passer dans le premier échangeur 37. Dans cette deuxième variante, une telle disposition n'est cependant qu'optionnelle.

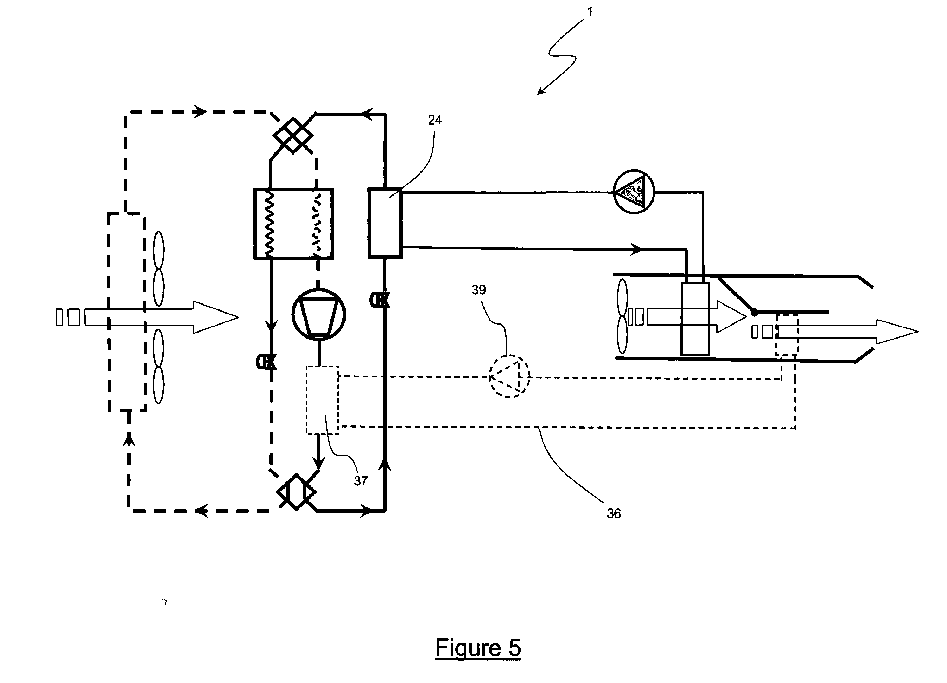

En effet, la figure 5 illustre l'ensemble 1 selon une solution où il est possible de réduire l'échange thermique du premier échangeur 37 sans prévoir de moyen de contournement, c'est-à-dire en permettant au fluide réfrigérant de traverser le premier échangeur 37.

C'est ainsi que le procédé selon l'invention prévoit que l'étape b) de suppression de l'échange thermique du premier échangeur 37 est réalisée par un arrêt du débit du deuxième fluide caloporteur dans le circuit secondaire 36. Autrement dit, le deuxième fluide caloporteur ne circule plus dans le circuit secondaire 36 car la pompe secondaire 39 est désactivée, alors que le fluide réfrigérant continue à passer au travers du premier échangeur 37. Une telle disposition réduit très fortement l'échange thermique entre le fluide réfrigérant et le deuxième fluide caloporteur puisque ces deux fluides présentent une température identique dès lors que la pompe secondaire 39 est arrêtée.

De manière alternative, l'étape de stockage b) du procédé prévoit une diminution de l'échange thermique dans le premier échangeur 37 opérée par un débit du deuxième fluide caloporteur dans le circuit secondaire 36 supérieur à 200 litres/heure. La pompe secondaire 39 est alors activée pour mettre en mouvement le deuxième fluide caloporteur selon un débit très élevé. Le débit de fluide caloporteur subit ainsi une augmentation à partir du débit nominal dans lequel est placée la pompe secondaire 39 avant la mise en oeuvre de l'étape de stockage.

Le deuxième fluide caloporteur traverse alors le premier échangeur de manière extrêmement rapide, le privant ainsi du temps nécessaire pour échanger thermiquement avec le fluide réfrigérant. Une telle disposition réduit l'échange thermique entre le deuxième fluide caloporteur et le fluide réfrigérant.

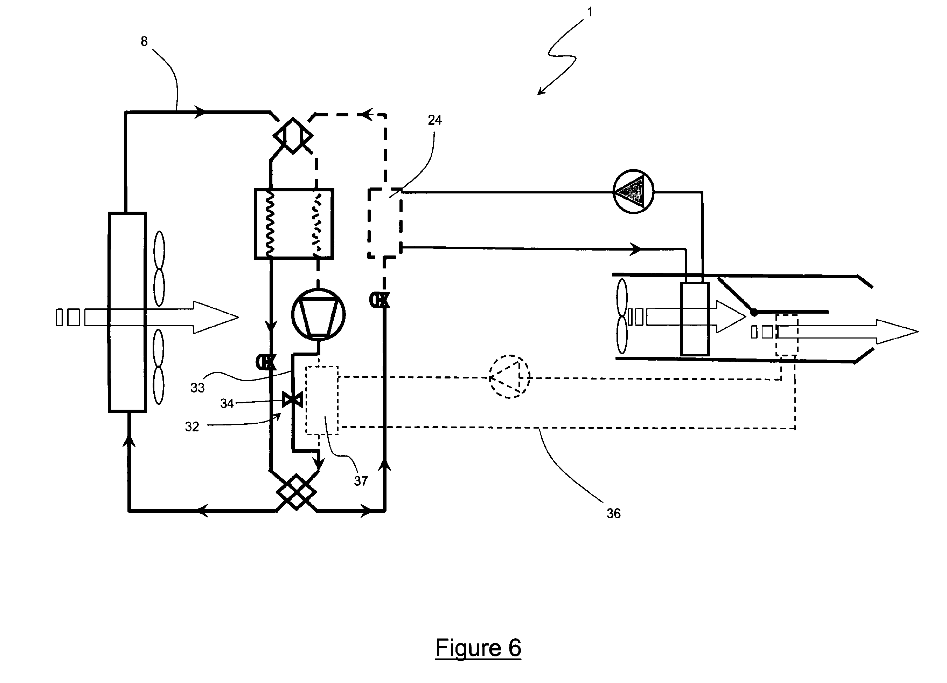

La figure 6 illustre la phase de dégivrage quand l'ensemble de conditionnement thermique 1 utilise un moyen de contournement 32 et un circuit secondaire 36.

Le circuit de climatisation 8 comprend le moyen de contournement 32 du premier échangeur 37. Ce moyen de contournement 32 comprend la conduite 33, placée en parallèle du premier échangeur 37 du point de vue du fluide réfrigérant, et une valve 34 chargée d'autoriser ou d'interdire la circulation de fluide réfrigérant dans la conduite 33. Cette valve 34 est une valve deux voies installée dans la conduite 33 mais, comme déjà évoqué plus haut, l'invention prévoit également le cas où la valve 34 est une valve trois voies installée à l'embranchement d'une conduite 33 qui va au premier échangeur 37, ou qui en revient, avec la conduite 33.

Les trois dispositions évoquées ci-dessus pour diminuer ou supprimer l'échange thermique entre le deuxième fluide caloporteur et le fluide réfrigérant au niveau du premier échangeur 37 ont pour conséquence d'augmenter l'échange thermique entre le fluide réfrigérant et le premier fluide caloporteur au coeur du deuxième échangeur 24, ce qui se traduit par un stockage des calories dans le circuit primaire 25.

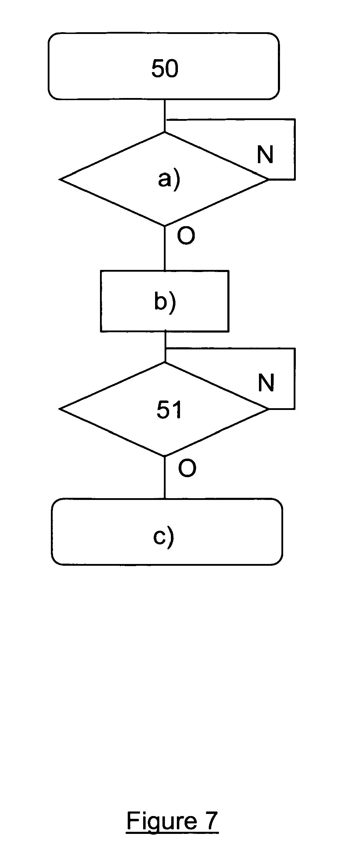

La figure 7 est un organigramme illustrant le processus décisionnel opéré par le procédé selon l'invention.

L'étape 50 correspond au mode de chauffage. On vérifie ainsi que l'ensemble de conditionnement thermique est dans le mode où le risque de givrage peut effectivement se produire.

L'étape a) correspond à l'étape de détermination du risque de givre ou de glace sur l'échangeur extérieur 13. Si ce risque de givre n'est pas avéré ou la présence de givre n'est pas détectée (sortie N), l'étape a) boucle sur elle-même et la détermination du risque de givre est opérée de manière cyclique.

En revanche, si la présence du risque de givre est vérifiée (sortie O), l'étape b) met en oeuvre la diminution ou la suppression de l'échange thermique au niveau du premier échangeur 10, 37, telle que détaillée aux figures 2, 5 et 6.

L'étape a) de vérification de présence du risque de givre est opérée selon l'un ou l'autre des exemples de réalisation détaillés ci-dessus, c'est-à-dire une durée de fonctionnement du mode chauffage, la détection ou l'évaluation de la basse pression du fluide réfrigérant à l'entrée du compresseur 9 ou la détection de givre par un capteur installé dans le faisceau de l'échangeur extérieur 13.

A ce stade, la température du premier fluide caloporteur dans le circuit primaire 25 augmente et ce dernier remplit alors la fonction de stockage thermique.

L'étape 51 illustre le temps nécessaire pour augmenter la température du premier fluide caloporteur. L'étape 51 compare la température du premier fluide caloporteur qui circule dans le circuit primaire à une température seuil, cette température étant déterminée selon les exemples présentés ci-dessus, c'est-à-dire une valeur fixe ou une valeur dépendante de la température du flux d'air intérieur pendant le mode de chauffage. Si cette température seuil n'est pas atteinte, la phase de pré-dégivrage est maintenue active par un cyclage illustré par la sortie N. En revanche, si la température seuil est atteinte ou dépassée (sortie O), le procédé met en oeuvre l'ensemble de conditionnement thermique selon le mode de dégivrage de l'échangeur extérieur 13, tel qu'illustré par l'étape c).

## Revendications

1. Procédé de contrôle d'un ensemble (1) de conditionnement thermique d'un habitacle de véhicule, comprenant un circuit de climatisation (8) parcouru par un fluide réfrigérant et un circuit primaire (25) parcouru par un premier fluide caloporteur, le circuit de climatisation (8) comprend au moins un compresseur (9), un premier échangeur (10, 37) agencé pour assurer un échange thermique en vue d'influencer la température d'un flux d'air intérieur (3) envoyé dans l'habitacle et un échangeur extérieur (13), le circuit primaire (25) comprend au moins un échangeur primaire (28) agencé pour assurer un échange thermique entre le premier fluide caloporteur et le flux d'air intérieur (3), ledit ensemble comprenant un deuxième échangeur (24) agencé pour assurer un échange thermique entre le fluide réfrigérant et le premier fluide caloporteur et installé dans le circuit de climatisation (8) en aval du premier échangeur (10, 37) selon le sens de déplacement du fluide réfrigérant dans le circuit de climatisation (8), **caractérisé en ce qu'**il comprend :
- une étape de détermination a) d'un risque de givrage de l'échangeur extérieur (13),
- une étape de stockage b) des calories consistant en une diminution ou une suppression de l'échange thermique du premier échangeur (10, 37), si l'étape de détermination a) est vérifiée.

2. Procédé selon la revendication 1, dans lequel l'étape de stockage b) est opérée jusqu'à ce que la température du premier fluide caloporteur atteigne une valeur seuil.

3. Procédé selon la revendication 2, **caractérisé en ce qu'**il comprend une étape de dégivrage c) selon laquelle les calories stockées dans le circuit primaire (25) sont restituées à l'échangeur extérieur (13), l'étape de dégivrage est activée quand la température du premier fluide caloporteur atteint la valeur seuil.

4. Procédé selon la revendication 2 ou 3, dans lequel l'ensemble (1) est apte à fonctionner selon un mode de chauffage où le flux d'air intérieur (3) est chauffé, un mode de refroidissement où le flux d'air intérieur (3) est refroidi, et un mode de dégivrage de l'échangeur extérieur (13), et en ce que le mode de dégivrage est activé quand la valeur seuil est atteinte.

5. Procédé selon l'une des revendications précédentes, dans lequel l'étape de détermination a) du risque de givrage correspond à une durée de fonctionnement de l'ensemble (1) en mode chauffage.

6. Procédé selon l'une quelconque des revendications 1 à 4, dans lequel l'étape de détermination a) du risque de givrage est opérée par mesure ou évaluation d'une pression du fluide réfrigérant à l'entrée du compresseur (9).

7. Procédé selon l'une quelconque des revendications 1 à 6, dans lequel l'étape de stockage b) de suppression de l'échange thermique du premier échangeur (37) consiste en un arrêt du débit du deuxième fluide caloporteur.

8. Procédé selon l'une quelconque des revendications 1 à 6, dans lequel l'étape de stockage b) de diminution de l'échange thermique du premier échangeur (37) est opérée par une augmentation un débit du deuxième fluide caloporteur dans le circuit secondaire (36) supérieur à 200 litres/heure.

9. Procédé selon l'une quelconque des revendications 1 à 6, dans lequel l'étape de stockage b) de suppression de l'échange thermique du premier échangeur (10, 37) est mise en oeuvre par une opération de contournement de ce premier échangeur (10, 37).

10. Dispositif de mise en oeuvre du procédé selon l'une quelconque des revendications précédentes dans lequel l'ensemble (1) comprend un circuit secondaire (36) parcouru par un deuxième fluide caloporteur, ledit premier échangeur (37) étant agencé pour assurer un échange thermique entre le fluide réfrigérant et le deuxième fluide caloporteur alors que le circuit secondaire (36) comprend un échangeur secondaire (38) agencé pour assurer un échange thermique entre le deuxième fluide caloporteur et le flux d'air intérieur.

## Patentansprüche

1. Verfahren zur Steuerung einer Klimatisierungseinheit (1) eines Fahrzeuginnenraums, die einen von einem Kühlfluid durchflossenen Klimatisierungskreislauf (8) und einen von einem ersten Wärmeträgerfluid durchflossenen Primärkreislauf (25) enthält, wobei der Klimatisierungskreislauf (8) mindestens einen Kompressor (9), einen ersten Tauscher (10, 37), der eingerichtet ist, um einen Wärmeaustausch zu gewährleisten, um die Temperatur eines in den Fahrgastinnenraum geschickten Innenluftstroms (3) zu beeinflussen, und einen äußeren Tauscher (13) enthält, wobei der Primärkreislauf (25) mindestens einen Primärtauscher (28) enthält, der eingerichtet ist, um einen Wärmeaustausch zwischen dem ersten Wärmeträgerfluid und dem Innenluftstrom (3) zu gewährleisten, wobei die Einheit einen zweiten Tauscher (24) enthält, der eingerichtet ist, um einen Wärmeaustausch zwischen dem Kühlfluid und dem ersten Wärmeträgerfluid zu gewährleisten, und im Klimatisierungskreislauf (8) stromabwärts hinter dem ersten Tauscher (10, 37) gemäß der Bewegungsrichtung des Kühlfluids im Klimatisierungskreislauf (8) angeordnet ist, **dadurch gekennzeichnet, dass** es enthält:
- einen Schritt der Feststellung a) einer Vereisungsgefahr des äußeren Tauschers (13),
- einen Schritt des Speicherns b) der Kalorien, der aus einer Verringerung oder einer Unterdrückung des Wärmeaustauschs des ersten Tauschers (10, 37) besteht, wenn der Feststellungsschritt a) bestätigt wird.

2. Verfahren nach Anspruch 1, wobei der Speicherschritt b) durchgeführt wird, bis die Temperatur des ersten Wärmeträgerfluids einen Schwellwert erreicht.

3. Verfahren nach Anspruch 2, **dadurch gekennzeichnet, dass** es einen Enteisungsschritt c) enthält, gemäß dem die im Primärkreislauf (25) gespeicherten Kalorien an den äußeren Tauscher (13) zurückgegeben werden, der Enteisungsschritt wird aktiviert, wenn die Temperatur des ersten Wärmeträgerfluids den Schwellwert erreicht.

4. Verfahren nach Anspruch 2 oder 3, wobei die Einheit (1) gemäß einem Heizmodus, in dem der Innenluftstrom (3) erwärmt wird, einem Kühlmodus, in dem der Innenluftstrom (3) gekühlt wird, und einem Enteisungsmodus des äußeren Tauschers (13) arbeiten kann, und dass der Enteisungsmodus aktiviert wird, wenn der Schwellwert erreicht ist.

5. Verfahren nach einem der vorhergehenden Ansprüche, wobei der Feststellungsschritt a) der Vereisungsgefahr einer Betriebsdauer der Einheit (1) im Heizmodus entspricht.

6. Verfahren nach einem der Ansprüche 1 bis 4, wobei der Feststellungsschritt a) der Vereisungsgefahr durch Messung oder Ermittlung eines Drucks des Kühlfluids am Eingang des Kompressors (9) durchgeführt wird.

7. Verfahren nach einem der Ansprüche 1 bis 6, wobei der Speicherschritt b) der Unterdrückung des Wärmeaustauschs des ersten Tauschers (37) aus einem Anhalten des Durchflusses des zweiten Wärmeträgerfluids besteht.

8. Verfahren nach einem der Ansprüche 1 bis 6, wobei der Speicherschritt b) der Verringerung des Wärmeaustauschs des ersten Tauschers (37) durch eine Erhöhung eines Durchsatzes des zweiten Wärmeträgerfluids im Sekundärkreislauf (36) von mehr als 200 Liter/Stunde ausgeführt wird.

9. Verfahren nach einem der Ansprüche 1 bis 6, wobei der Speicherschritt b) der Unterdrückung des Wärmeaustauschs des ersten Tauschers (10, 37) durch einen Vorgang des Umgehens dieses ersten Tauschers (10, 37) angewendet wird.

10. Vorrichtung zur Anwendung des Verfahrens nach einem der vorhergehenden Ansprüche, wobei die Einheit (1) einen Sekundärkreislauf (36) enthält, der von einem zweiten Wärmeträgerfluid durchflossen wird, wobei der erste Tauscher (37) eingerichtet ist, um einen Wärmeaustausch zwischen dem Kühlfluid und dem zweiten Wärmeträgerfluid zu gewährleisten, während der Sekundärkreislauf (36) einen Sekundärtauscher (38) enthält, der eingerichtet ist, um einen Wärmeaustausch zwischen dem zweiten Wärmeträgerfluid und dem Innenluftstrom zu gewährleisten.

## Claims

1. Method for controlling a unit (1) for the thermal conditioning of a vehicle interior, comprising an air conditioning circuit (8) through which a refrigerant fluid passes and a primary circuit (25) through which a first heat-transfer fluid passes, the air conditioning circuit (8) comprising at least one compressor (9), a first exchanger (10, 37) designed to perform an exchange of heat with a view to influencing the temperature of an interior air flow (3) sent into the vehicle interior and an exterior exchanger (13), the primary circuit (25) comprises at least one primary exchanger (28) designed to perform an exchange of heat between the first heat-transfer fluid and the interior air flow (3), said unit comprising a second exchanger (24) designed to perform an exchange of heat between the refrigerant fluid and the first heat-transfer fluid and installed in the air conditioning circuit (8) downstream of the first exchanger (10, 37) in the direction in which the refrigerant fluid passes through the air conditioning circuit (8), **characterized in that** it comprises:
- a determination step a) of determining a risk of frosting of the exterior exchanger (13),
- a storage step b) of storing heat energy consisting in reducing or eliminating the exchange of heat of the first exchanger (10, 37) if the determination step a) is verified.

2. Method according to Claim 1, in which the storage step b) is performed until the temperature of the first heat-transfer fluid reaches a threshold value.

3. Method according to Claim 2, **characterized in that** it comprises a defrosting step c) whereby the heat energy stored in the primary circuit (25) is restored to the exterior exchanger (13), the defrosting step being activated when the temperature of the first heat-transfer fluid reaches the threshold value.

4. Method according to Claim 2 or 3, in which the unit (1) is able to operate in a heating mode in which the interior air flow (3) is heated, a cooling mode in which the interior air flow (3) is cooled, and a defrosting mode of defrosting the exterior exchanger (13), and in that the defrosting mode is activated when the threshold value is reached.

5. Method according to one of the preceding claims, in which the determination step a) of determining the risk of frosting corresponds to a duration of operation of the unit (1) in heating mode.

6. Method according to any one of Claims 1 to 4, in which the determination step a) of determining the risk of frosting is performed by measuring or evaluating a pressure of the refrigerant fluid at the inlet to the compressor (9).

7. Method according to any one of Claims 1 to 6, in which the storage step b) of eliminating the exchange of heat of the first exchanger (37) consists in halting the flow of the second heat-transfer fluid.

8. Method according to any one of Claims 1 to 6, in which the storage step b) of reducing the exchange of heat of the first exchanger (37) is performed by increasing a rate of flow of the second heat-transfer fluid in the secondary circuit (36) above 200 litres/hour.

9. Method according to any one of Claims 1 to 6, in which the storage step b) of eliminating the exchange of heat of the first exchanger (10, 37) is performed by means of an operation of bypassing this first exchanger (10, 37).

10. Device for implementing the method according to any one of the preceding claims, in which the unit (1) comprises a secondary circuit (36) through which a second heat-transfer fluid passes, the said first exchanger (37) being designed to perform an exchange of heat between the refrigerant fluid and the second heat-transfer fluid, whereas the secondary circuit (36) comprises a secondary exchanger (38) designed to perform an exchange of heat between the second heat-transfer fluid and the interior air flow.
